# FASCICULE DE BREVET EUROPEEN

(11) **EP 3 109 712 B1**
(45) Date de publication et mention de la délivrance du brevet: **27.12.2017**
(21) Numéro de dépôt: 16169438.5
(22) Date de dépôt: 12.05.2016
(51) Int. Cl.: G04B 31/02, F16C 32/04

(54) **DISPOSITIF MAGNÉTIQUE DE PIVOTEMENT D'UN ARBRE DANS UN MOUVEMENT HORLOGER**
MAGNETISCHE VORRICHTUNG ZUM SCHWENKEN EINER WELLE IN EINEM UHRWERK
MAGNETIC DEVICE FOR PIVOTING AN ARBOR IN A CLOCK MOVEMENT

(30) Priorité: 16.06.2015 EP 15172406
(43) Date de publication de la demande: 28.12.2016
(73) Titulaire: MONTRES BREGUET S.A., 1344 L'Abbaye (CH)
(72) Inventeur: Zaugg, Alain, 1347 Le Sentier (CH); Légeret, Benoît, 1347 Le Sentier (CH); Maréchal, Sylvain, 39220 Bois-d'Amont (FR); Sarchi, Davide, 1020 Renens (CH)
(74) Mandataire: Surmely, Gérard

(56) Documents cités:
- WO-A1-2012/062524
- FR-A- 1 098 890
- US-A- 4 340 038

## Description

### DOMAINE DE L'INVENTION

La présente invention concerne un ensemble horloger comprenant un arbre d'un organe rotatif et un dispositif de pivotement de cet arbre selon un axe déterminé dans un mouvement horloger, le dispositif de pivotement comprenant au moins un palier magnétique équipé d'un aimant agencé pour exercer une force d'attraction sur un pivot en matériau magnétique de l'arbre.

### ART ANTERIEUR

L'utilisation d'aimants permanents dans des organes rotatifs de mouvements horlogers est potentiellement avantageuse en particulier parce qu'elle permet de créer des forces importantes et localisées tout en limitant les frottements.

On connait déjà des dispositifs de pivotement à aimant qui correspondent à la définition donnée en préambule. Le dispositif de pivotement d'un arbre dans une pièce d'horlogerie qui est représenté dans la figure 13 du document de brevet WO2012/062524 en est un exemple. La figure 1 annexée est une reproduction de cette illustration de l'art antérieur. Le dispositif de pivotement représenté est prévu pour un arbre 1 dont les extrémités forment deux pivots respectivement référencés 2 et 3. Les pivots sont réalisés en un matériau magnétique. La figure montre également un premier et un second palier agencés pour supporter et guider en rotation les deux pivots 2 et 3. Chacun des deux paliers comporte un chaton, respectivement référencés 40 et 44, un aimant permanent, respectivement référencés 4 et 6, monté dans le chaton et une pierre avec une surface d'appui, respectivement référencées 18A et 19A, insérée entre l'aimant et l'embouchure du chaton. Les aimants 4 et 6 du premier palier et du deuxième palier sont orientés de manière à attirer respectivement le premier et le second pivot, de sorte que l'arbre 1 soit maintenu dans l'axe de pivotement, avec un certain jeu, tant radial qu'axial.

La réalisation de mécanismes horlogers fiables fonctionnant selon les principes qui viennent d'être décrits ci-dessus représente un défi technique important à cause des dimensions extrêmement réduites et de la grande précision spatiale demandée pour accomplir avec précision des fonctions chronométriques.

En effet, la plupart des matériaux magnétiques naturels ou synthétiques sont inhomogènes à l'échelle d'un millimètre ou moins. La localisation et l'intensité des champs magnétiques à cette échelle est donc difficilement maitrisable. En particulier, les micro-aimants permanents qui présentent la plus haute densité d'énergie magnétique, par exemple les micro-aimants en SmCo ou NdFeB, sont typiquement fabriqués à partir de poudres d'éléments chimiques appartenant à la famille des terres rares, leur structure granulaire comportant des dimensions comprises entre 1 et 100 microns. L'homogénéité du champ magnétique diminue généralement en s'approchant de l'échelle des grains.

### BREF EXPOSE DE L'INVENTION

Un but de la présente invention est de remédier aux inconvénients de l'art antérieur en fournissant un dispositif de pivotement dans lequel la répartition spatiale du champ magnétique engendré par un aimant est déterminée avec une plus grande précision. La présente invention atteint ce but en fournissant un dispositif de pivotement conforme à la revendication 1 annexée.

On comprendra que, conformément à l'invention, la présence de la structure de centrage du flux magnétique entre l'aimant et le pivot a pour effet, d'une part, d'augmenter l'intensité du champ magnétique au niveau de la partie centrale, et d'autre part, d'augmenter le gradient radial du champ magnétique. Un premier avantage de l'invention est donc d'augmenter la force de rappel magnétique qui agit radialement sur le pivot.

Conformément à l'invention, la partie centrale présente, en section transversale à l'axe de pivotement, des dimensions inférieures à celles de l'aimant. De plus, comme la partie centrale concentre le champ magnétique, le pivot est attiré en direction du centre de la partie centrale. Un deuxième avantage de l'invention est donc de centrer le pivot avec une meilleure précision indépendamment d'éventuels défauts magnétiques de l'aimant.

Conformément à l'invention, la partie périphérique est assemblée rigidement au support de manière à ce que la partie centrale soit centrée sur l'axe de pivotement déterminé. Un troisième avantage de l'invention est donc que la structure de centrage du flux magnétique est centrée par construction et canalise le flux magnétique de l'aimant de manière centrée sur l'axe de pivotement prévu, indépendamment d'éventuels défauts géométriques de l'aimant.

Conformément à l'invention, la partie centrale de la structure de centrage est maintenue élastiquement en place par la partie périphérique à laquelle elle est reliée. En effet, la partie centrale est reliée élastiquement à la partie périphérique par au moins un élément de liaison et cette partie périphérique est insérée à force dans un logement du support, la partie centrale étant reliée au support par l'intermédiaire de la partie périphérique. Ainsi, même si la partie périphérique est déformée lors de son assemblage à force avec le support, la partie centrale conserve sensiblement sa position centrale relativement à la partie périphérique de la structure de centrage. Un quatrième avantage de l'invention est donc un « auto-centrage » de la partie centrale lors de l'assemblage de la structure de centrage avec son support.

Précisons que par « reliée élastiquement », on entend que le/les élément(s) de liaison entre la partie centrale et la partie périphérique est/sont élastique(s) et que la déformation qu'il(s) subi(ssen)t lors de l'assemblage à force de la partie périphérique au support est une déformation essentiellement élastique. L'adjectif « élastique » signifie : « Qui a la propriété de reprendre, au moins partiellement, sa forme ou son volume, après les avoir perdu par déformation ». Lorsqu'on déforme un objet élastique, la déformation produit des forces de rappel qui s'opposent à la déformation et dont l'intensité est une fonction croissante de l'amplitude de la déformation.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en coupe longitudinale d'un dispositif de pivotement magnétique de l'art antérieur ;
- la figure 2 et 4 sont des vues partielles, respectivement en perspective et en coupe longitudinale, d'un dispositif de pivotement antichoc correspondant à un premier mode de réalisation exemplaire de l'invention ;
- la figure 3 est une vue partielle en coupe d'un mouvement de montre, qui montre à titre d'exemple comment le dispositif de pivotement des figures 2 et 4 peut être intégré dans un mouvement horloger ;
- les figures 5, 6 et 7 sont des vues schématiques en plan qui illustrent trois variantes de structures de centrage du flux magnétique convenant pour être utilisées par exemple dans le dispositif de pivotement des figures 2, 3 et 4 ;
- la figure 8A est une vue en perspective d'une structure de centrage du flux magnétique convenant pour être utilisée par exemple dans un dispositif de pivotement de la figure 8B;
- la figure 8B est une vue partielle en coupe longitudinale semblable à celle de la figure 4 mais illustrant un dispositif de pivotement correspondant à un deuxième mode de réalisation exemplaire de l'invention.

### DESCRIPTION DETAILLEE DE MODES DE REALISATION

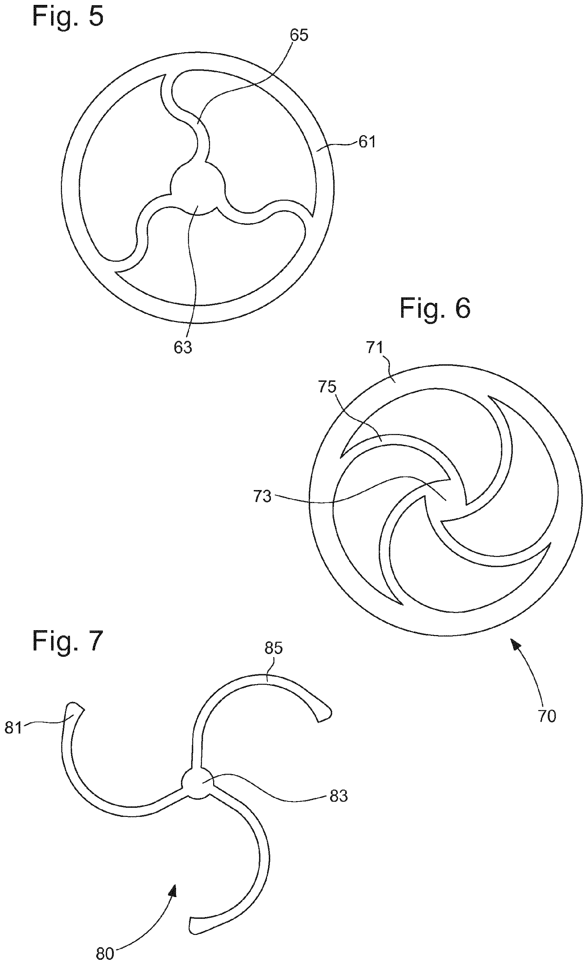

Les figures 5, 6 et 7 sont des vues schématiques en plan qui illustrent trois variantes de la structure de centrage du flux magnétique pour un dispositif de pivotement conforme à un mode de réalisation particulier de l'invention.

Conformément à l'invention, la structure de centrage comprend une partie périphérique (respectivement référencées 61, 71 et 81 sur les figures 5, 6 et 7) et une partie centrale (respectivement référencées 63, 73, 83) reliée élastiquement à la partie périphérique par au moins un élément de liaison (respectivement référencés 65, 75, 85). Selon l'invention toujours, la partie centrale est formée d'un matériau à haute perméabilité magnétique. Les autres parties de la structure de centrage du flux magnétique peuvent être formées du même matériau que la partie centrale. Toutefois, il est également possible de réaliser l'élément de liaison et la partie périphérique en un autre matériau, par exemple un matériau qui a de préférence une faible perméabilité magnétique, en particulier un matériau amagnétique. Par matériau amagnétique, on entend un matériau ayant une faible perméabilité magnétique proche d'une valeur de 1. La structure de centrage du flux magnétique peut par exemple être réalisée par la technique LIGA.

Selon une variante non représentée de l'invention, l'élément de liaison reliant élastiquement la partie périphérique à la partie centrale peut prendre la forme d'une feuille mince (éventuellement une feuille mince ondulée) qui s'étend de la partie centrale à la partie périphérique, de préférence sur 360° tout autour de la partie centrale, de manière à fermer l'espace entre la partie périphérique et la partie centrale. Dans le cas où la feuille mince constituant l'élément de liaison est réalisée dans le même matériau que la partie centrale, son épaisseur est de préférence égale ou inférieure à un dixième de l'épaisseur de la partie centrale, de manière à éviter une fermeture des lignes de champ magnétique autour de l'aimant au travers de cette feuille mince, et donc à minimiser un effet de blindage. On comprendra en outre que la feuille constituant l'élément de liaison peut éventuellement être ajourée.

En se référant à nouveau aux figures 5, 6 et 7, on peut voir que les structures de centrage du flux magnétique qui sont représentées comportent chacune au moins trois éléments de liaison élastiques. La partie périphérique 61 de la structure de centrage du flux magnétique 60 représentée dans la figure 5 présente la forme d'un anneau circulaire. On comprendra toutefois que la partie périphérique pourrait alternativement être ovale, elliptique, polygonale, etc. Dans l'exemple illustré à la figure 5, la partie centrale 63 présente une forme de pastille dont le diamètre est égal à environ 12% du diamètre de la partie périphérique. La partie centrale et la partie périphérique sont reliées par trois éléments de liaison 65 en forme de « S ». Comme le montre la figure 5, les trois éléments de liaison sont agencées radialement autour de la partie centrale et espacées angulairement d'environ 120° l'un de l'autre. De plus, les éléments de liaison s'étendent sur une longueur qui est égale à environ 40% du diamètre de la structure de centrage. Plus généralement, l'empan des éléments de liaison est de préférence compris entre 20% et 45% du diamètre de la structure de centrage. On comprendra en outre que la forme en « S » des éléments de liaison 65 a pour effet d'en augmenter l'élasticité.

En se référant maintenant plus particulièrement à la figure 6, on peut voir que la structure de centrage représentée comporte une partie périphérique 71 et une partie centrale 73 reliées l'une à l'autre par quatre éléments de liaison 75. Comme on peut le voir, les éléments de liaison représentés ont la forme de barrettes courbées en arc de cercle. On comprendra que la courbure en arc de cercle, que présentent les barrettes dans la variante représentée, a pour effet d'augmenter l'élasticité de la liaison entre la partie centrale et la partie périphérique. A la figure 6, les quatre éléments de liaison élastiques présente chacun un décalage angulaire de 90° relativement à chacun des deux éléments adjacents.

La variante de structure de centrage du flux magnétique représentée dans la figure 7 se distingue des deux variantes précédentes en particulier par le fait que la partie périphérique 81 ne forme pas un cadre fermé. Comme on peut le voir sur cette figure, dans la variante représentée, la partie périphérique est formée par les trois extrémités distales des éléments de liaison 85 en arc de cercle. La partie périphérique est donc discontinue. Dans l'exemple illustré, elle se limite à trois languettes régulièrement distribuées autour de la pastille formant la partie centrale 83.

Dans les trois variantes des figures 5 à 7, selon un mode de réalisation préféré, les éléments de liaison élastiques sont agencés régulièrement autour de la partie centrale. Plus particulièrement, dans ces variantes, les éléments de liaison élastiques présentent tous une forme semblable et sont agencés angulairement relativement à la partie centrale avec un décalage angulaire sensiblement constant entre deux éléments de liaison adjacents quelconques. On notera que par forme semblable, on comprend également une forme résultant d'une symétrie axiale ou centrale opérée sur une forme donnée, par exemple une inversion de la forme « S » par une symétrie d'axe vertical. Ce mode de réalisation préféré permet de conserver une position centrale donnée, relativement au support de la structure de centrage du flux magnétique, pour la partie centrale lors du montage à force de cette structure dans son support, indépendamment des contraintes exercées sur la partie périphérique lors d'un tel chassage qui peuvent engendrer une certaine déformation de cette partie périphérique, notamment une diminution de ses dimensions extérieures.

Le matériau à haute perméabilité magnétique, dont est réalisé la partie centrale de la structure de centrage du flux magnétique conforme à l'invention, peut avantageusement être du nickel ou du cobalt, ou encore un alliage à base de nickel ou de cobalt. Dans une forme d'exécution, le matériau peut être du nickel-phosphore avec un pourcentage de phosphore inférieur ou égal à 11%. Selon une autre variante l'élément de centrage de flux magnétique peut être réalisé intégralement en un matériau magnétiquement doux, caractérisé par un champ coercitif H_{c} inférieur à 5 kA/m, de saturation supérieur à 0.5 T et une perméabilité *µ_{R}* maximale égale ou supérieure à 1000. Selon une autre variante, le matériau peut être magnétiquement dur.

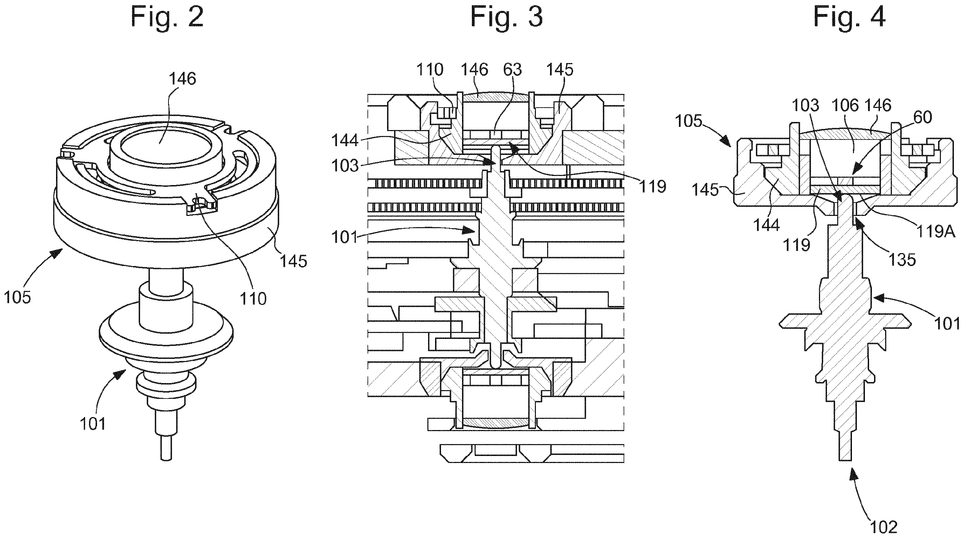

Les figures 2, 3 et 4 illustrent un dispositif de pivotement antichoc qui correspond à un premier mode particulier de réalisation de l'invention. On comprendra, que les structures de centrage du flux magnétique 60, 70 et 80 qui ont été décrites en relation avec les figures 5, 6 et 7 sont adaptées notamment pour être utilisées dans le dispositif de pivotement qui va maintenant être décrit.

Sur les figures 2, 3 et 4, on peut voir un support 145, dont la base comporte une ouverture 135 pour le passage du pivot 103. Le support est prévu pour positionner un chaton 144. À cet effet, le chaton est maintenu dans un logement en forme de cône inversé du support 145 par des moyens élastiques qui, dans le présent exemple, sont constitués par un ressort 110. Dans l'exemple illustré, le support 145 est une pièce de révolution comprenant un rebord circulaire. Le dispositif de pivotement est prévu pour un arbre 101 dont les extrémités 102, 103 forment respectivement des premier et second pivots. Le pivot 103 est réalisé en un matériau magnétique. D'autre part, le chaton 144 et le support 145 font partie d'un palier 105 qui est agencé pour supporter et guider en rotation le pivot 103. Comme le montre la figure 3, le dispositif de pivotement du présent exemple comprend également un deuxième palier (non-référencé) qui est agencé pour supporter et guider en rotation le pivot 102 (lequel n'est pas montré sur les figures 2 et 4).

On peut voir encore que le chaton 144 contient une pierre de fermeture 146, un aimant permanent 106, une structure de centrage du flux magnétique 60 et une pierre tribologique 119 qui présente une surface d'appui 119A pour le pivot 103. La surface d'appui forme une butée pour le pivot. La pierre 146 est agencée pour fermer le dessus du chaton et former ainsi un logement fermé pour l'aimant. La pierre tribologique est insérée entre l'aimant et l'embouchure du chaton et la structure de centrage du flux magnétique est prise en sandwich entre l'aimant et la pierre tribologique. On comprendra que l'aimant 106 et la structure de centrage 60 sont agencés de manière à attirer le pivot 103, de sorte que l'arbre 101 soit maintenu radialement dans une position déterminée et aussi, avec un certain jeu, dans une position axiale donnée.

En cas de choc axial, le pivot 103 de l'axe de balancier 101 repousse la pierre tribologique 119 et le chaton 144 vers le haut. Dans ce cas, le ressort 110 agit seul pour ramener le chaton et l'axe de balancier dans leur position initiale. Le ressort 110 est dimensionné pour avoir une limite de déplacement de sorte qu'au-delà de cette limite, un épaulement de l'arbre 101 arrive en butée contre le pourtour de l'ouverture 135 de manière à permettre à une portion plus épaisse de l'arbre d'absorber le choc. En cas de choc latéral d'intensité modérée, c'est le champ magnétique produit par l'aimant 106 qui agit seul pour ramener le pivot dans sa position d'équilibre. On comprendra que la position d'équilibre du pivot correspond au maximum d'intensité du champ magnétique et que l'emplacement de ce maximum d'intensité coïncide avec la position de la partie centrale 63 de la structure de centrage 60. Si l'intensité du choc latéral dépasse une certaine limite, la force produite par le champ magnétique ne suffit pas pour retenir le pivot 103. Le pivot vient alors buter contre le pourtour de l'ouverture 135. Ensuite, une fois la course du pivot stoppée par le pourtour de l'ouverture, la force magnétique peut ramener le pivot vers sa position d'équilibre.

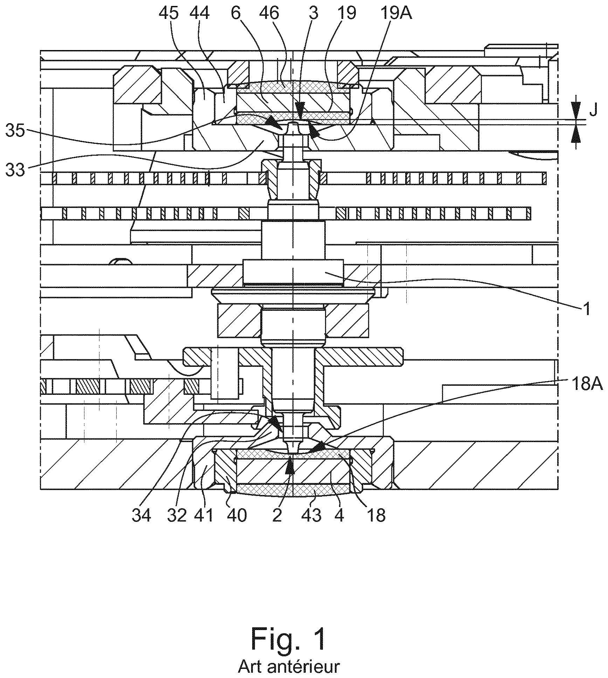

Selon une variante, au lieu d'être plane, la surface d'appui 119A de la pierre tribologique 119 pourrait présenter une creusure à l'instar de la surface d'appui 19A de la pierre 19 de la figure 1. On comprendra que dans ce cas, la force de l'aimant ne serait pas seule à agir pour ramener le pivot dans sa position d'équilibre suite à un choc, mais que la force de maintien du pivot contre la creusure contribuerait à ramener le pivot dans sa position d'équilibre (la force axiale induit, via la force de réaction de la creusure, une composante radiale).

Dans les variantes des figures 2, 3 et 4, la structure de centrage du flux magnétique et l'aimant ont sensiblement un même diamètre. Ce diamètre est de préférence compris entre 0,4 et 1,5mm. Conformément à l'invention, la partie centrale 63 de la structure de centrage 60 présente, en section transversale à l'axe de pivotement, des dimensions inférieures à celles de l'aimant. Dans ces conditions, le diamètre de la partie centrale est de préférence compris entre 0,1 et 1mm. D'autre part, l'épaisseur de cette partie centrale est de préférence comprise entre 40 et 100µm.

Conformément à l'invention, le dispositif de pivotement comporte un support pour la structure de centrage. La partie périphérique 61 de la structure de centrage est assemblée rigidement au support, cette partie périphérique étant insérée à force dans un logement du support. On comprendra que selon le mode de réalisation qui fait l'objet du présent exemple, le support en question est constitué par le chaton 144. La partie périphérique est ainsi chassée dans le chaton. L'expérience montre que cette manière de procéder peut entraîner une déformation relativement importante de la partie périphérique 61. Dans ces conditions, si la partie centrale 63 n'était pas reliée à la partie périphérique de manière élastique, la position occupée par la partie centrale après le chassage serait pratiquement imprévisible. Un avantage de la liaison élastique conforme à l'invention est que la position de la partie centrale après le chassage correspond à une position d'équilibre élastique qui reste par construction proche du centre du chaton. On s'assure ainsi que la partie centrale est centrée sur l'axe de pivotement qui passe par le milieu du chaton.

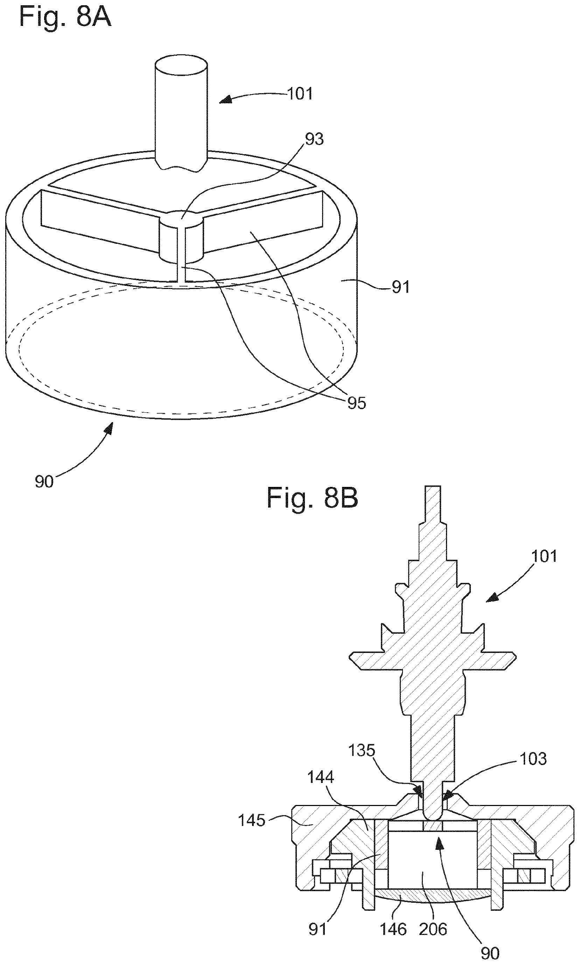

Les figures 8A et 8B correspondent à un deuxième mode particulier de réalisation de l'invention. La figure 8B est une vue partielle en coupe longitudinale de ce deuxième mode de réalisation du dispositif de pivotement de l'invention. La figure 8A est une vue schématique en perspective montrant uniquement la structure de centrage du flux magnétique et une partie de l'arbre 101. On comprendra notamment que le pivot 103 qui est situé à l'extrémité de l'arbre n'est pas représenté dans cette vue partielle, de manière à ne pas surcharger le dessin. En se référant toujours à la figure 8A, on peut voir que la structure de centrage 90 représentée comporte trois éléments de liaison 95 en forme de barrettes qui sont orientés radialement (de façon semblable à ce qui était déjà le cas dans la figure 5). La structure de centrage 90 comporte et une partie centrale 93 en forme de petit cylindre plein, et une partie périphérique 91 en forme de tube. Dans l'exemple illustré, il s'agit d'un tube de section circulaire. On comprendra toutefois qu'il pourrait alternativement s'agir d'un tube de section ovale, elliptique, polygonale, etc. D'autre part, comme le montre la figure 8A, et contrairement à ce qui était le cas avec le premier mode de réalisation, la partie périphérique 91 est beaucoup plus haute que la partie centrale 93. La partie centrale est située à une extrémité du tube 91. On comprendra donc que, dans le mode de réalisation illustré, la partie périphérique délimite une cavité au-dessous de la partie centrale. Comme le montre la figure 8B, cette cavité est adaptée pour contenir un aimant.

La figure 8B est très semblable à la figure 4. C'est la raison pour laquelle on a attribué les mêmes numéros de référence à ceux des éléments de la figure 8B qui sont pratiquement identiques à un élément de la figure 4. On notera toutefois que l'aimant 206 à un diamètre plus petit que le diamètre de l'aimant 106 de la figure 4, ce qui permet le chassage ou le collage de l'aimant 206 à l'intérieur de la partie périphérique 91 de la structure de centrage du flux magnétique 90. Le dispositif de pivotement illustré dans la figure 8B ne sera pas décrit en détail puisqu'il est quasi identique à celui de la figure 4.

En se référant toujours à la figure 8B, on peut voir de plus que le pivot 103 est en contact direct avec la partie centrale 93 de la structure de centrage du flux magnétique qui définit ainsi un contre-pivot. On comprendra donc que, dans la variante représentée, la partie centrale de la structure de centrage fait également office de surface d'appui pour le pivot. A cet effet, la partie centrale 93 est réalisée avec un matériau magnétique qui a aussi de bonnes propriétés tribologiques. De tels matériaux, possédant à la fois de bonnes qualités magnétiques et de bonnes qualités tribologiques, peuvent être obtenus par exemple sous la forme d'un alliage combinant un métal dur avec un liant de Cobalt ou de Nickel. Selon une variante avantageuse, le métal dur en question est le carbure de Tungstène (WC). Selon une variante préférée, le matériau dont est fait le contre-pivot est un mélange de carbure de Tungstène et de Cobalt comprenant entre 20 et 25% de Cobalt. Alternativement, le matériau constituant le contre-pivot peut être un verre métallique magnétique. Avantageusement le verre métallique est un verre métallique à base de Fer. On comprendra en outre que diverses modifications et/ou améliorations évidentes pour un homme du métier peuvent être apportées aux modes de réalisation qui font l'objet de la présente description sans sortir du cadre de la présente invention définie par les revendications annexées.

## Revendications

1. Dispositif de pivotement d'un arbre (101) selon un axe de pivotement déterminé dans un mouvement horloger, comprenant au moins un palier magnétique (105) comportant un aimant (106 ; 206) agencé pour exercer une force d'attraction sur un pivot (103) en matériau magnétique de l'arbre, **caractérisé en ce que** le palier (105) comporte une structure de centrage du flux magnétique (60; 70; 80; 90), agencée entre l'aimant (106 ; 206) et le pivot (103), et un support (144) de la structure de centrage, cette structure de centrage comprenant une partie périphérique (61; 71; 81; 91) et une partie centrale (63; 73; 83; 93) reliée élastiquement à la partie périphérique par au moins un élément de liaison (65; 75; 85; 95), la partie centrale étant formée d'un matériau à haute perméabilité magnétique et présentant, en section transversale à l'axe de pivotement, des dimensions inférieures à celles de l'aimant ; et **en ce que** la partie périphérique est assemblée rigidement audit support (144) de manière que la partie centrale soit centrée sur l'axe de pivotement déterminé, cette partie périphérique étant insérée à force dans un logement du support et la partie centrale étant ainsi reliée au support par l'intermédiaire de la partie périphérique.

2. Dispositif de pivotement selon la revendication 1, **caractérisé en ce que** la structure de centrage du flux magnétique (60; 70; 80; 90) comporte au moins trois éléments de liaison élastiques (65; 75; 85; 95).

3. Dispositif de pivotement selon la revendication 2, **caractérisé en ce que** lesdits au moins trois éléments de liaison élastiques sont agencés régulièrement autour de ladite partie centrale.

4. Dispositif de pivotement selon la revendication 3, **caractérisé en ce que** lesdits au moins trois éléments de liaison élastiques présentent tous une forme semblable et sont agencés angulairement, relativement à ladite partie centrale, avec un décalage angulaire sensiblement constant entre deux éléments de liaison adjacents quelconques.

5. Dispositif de pivotement selon l'une des revendications précédentes, **caractérisé en ce qu'**il définit un dispositif de pivotement antichoc dans lequel le palier (105) est maintenu élastiquement en place.

6. Dispositif de pivotement selon l'une des revendications précédentes, **caractérisé en ce qu'**une pierre tribologique, définissant une surface d'appui (119A) pour le pivot (103), est agencée entre le dispositif de centrage du flux magnétique (60; 70; 80; 90) et ce pivot, la surface d'appui formant une butée pour le pivot.

7. Dispositif de pivotement selon l'une des revendications précédentes, **caractérisé en ce que** le palier (105) comporte un chaton (144), l'aimant (106) étant monté dans le chaton et le dispositif de centrage du flux magnétique (60; 70; 80) étant inséré entre l'aimant et l'embouchure du chaton.

8. Dispositif de pivotement selon l'une des revendications 1 à 6, **caractérisé en ce que** la partie extérieure (91) du dispositif de centrage (90) forme un tube et ladite partie centrale est située à une extrémité de ce tube, ledit aimant (206) étant monté à l'intérieur du tube de manière que la partie centrale se trouve entre cet aimant et le pivot (103).

## Patentansprüche

1. Vorrichtung zum Drehen einer Welle (101) um eine bestimmte Drehachse in einem Uhrwerk, die mindestens ein Magnetlager (105) umfasst, das einen Magneten (106; 206) enthält, der dafür ausgelegt ist, auf einen Drehzapfen (103) aus magnetischem Material der Welle eine anziehende Kraft auszuüben, **dadurch gekennzeichnet, dass** das Lager (105) eine Struktur (60; 70; 80; 90) zur Zentrierung des magnetischen Flusses umfasst, die zwischen dem Magneten (106; 206) und dem Drehzapfen (103) angeordnet ist, und einen Träger (144) der Zentrierungsstruktur umfasst, wobei diese Zentrierungsstruktur einen Umfangsteil (61; 71; 81; 91) und einen Mittelteil (63; 73; 83; 93), der mit dem Umfangsteil über mindestens ein Verbindungselement (65; 75; 85; 95) elastisch verbunden ist, umfasst, wobei der Mittelteil aus einem Material mit hoher magnetischer Permeabilität gebildet ist und im Schnitt quer zur Drehachse Abmessungen besitzt, die kleiner als jene des Magneten sind; und dass der Umfangsteil an den Träger (144) starr angefügt ist, derart, dass der Mittelteil auf die bestimmte Drehachse zentriert ist, wobei dieser Umfangsteil mit Kraft in einen Aufnahmeraum des Trägers eingepresst ist und der Mittelteil daher mit dem Träger über den Umfangsteil verbunden ist.

2. Drehvorrichtung nach Anspruch 1, **dadurch gekennzeichnet, dass** die Struktur (60; 70; 80; 90) zur Zentrierung des magnetischen Flusses mindestens drei elastische Verbindungselemente (65; 75; 85; 95) umfasst.

3. Drehvorrichtung nach Anspruch 2, **dadurch gekennzeichnet, dass** die mindestens drei elastischen Verbindungselemente um den Mittelteil regelmäßig angeordnet sind.

4. Drehvorrichtung nach Anspruch 3, **dadurch gekennzeichnet, dass** die mindestens drei elastischen Verbindungselemente alle eine ähnliche Form aufweisen und in Winkelrichtung mit einem im Wesentlichen konstanten Winkelversatz zwischen zwei beliebigen benachbarten Verbindungselementen relativ zu dem Mittelteil angeordnet sind.

5. Drehvorrichtung nach einem der vorhergehenden Ansprüche, **dadurch gekennzeichnet, dass** sie eine stoßfeste Drehvorrichtung definiert, in der das Lager (105) elastisch an seinem Ort gehalten wird.

6. Drehvorrichtung nach einem der vorhergehenden Ansprüche, **dadurch gekennzeichnet, dass** ein tribologischer Stein, der eine Abstützoberfläche (119A) für den Drehzapfen (103) definiert, zwischen der Vorrichtung (60; 70; 80; 90) für die Zentrierung des magnetischen Flusses und diesem Drehzapfen angeordnet ist, wobei die Abstützoberfläche für den Drehzapfen einen Anschlag bildet.

7. Drehvorrichtung nach einem der vorhergehenden Ansprüche, **dadurch gekennzeichnet, dass** das Lager (105) ein Futter (144) umfasst, wobei der Magnet (106) in dem Futter montiert ist und die Vorrichtung (60; 70; 80) zum Zentrieren des magnetischen Flusses zwischen den Magneten und die Mündung des Futters eingesetzt ist.

8. Drehvorrichtung nach einem der Ansprüche 1 bis 6, **dadurch gekennzeichnet, dass** der äußere Teil (91) der Zentrierungsvorrichtung (90) ein Rohr bildet und der Mittelteil sich an einem Ende dieses Rohrs befindet, wobei der Magnet (206) in dem Rohr in der Weise montiert ist, dass sich der Mittelteil zwischen diesen Magneten und dem Drehzapfen (103) befindet.

## Claims

1. Device for pivoting an arbor (101) about a determined pivot axis in a timepiece movement, including at least one magnetic bearing (105) comprising a magnet (106; 206) arranged to exert a force of attraction on a pivot (103), made of magnetic material, of the arbor, **characterized in that** the bearing (105) includes a magnetic flux centring structure (60; 70; 80; 90), arranged between the magnet (106; 206) and the pivot (103), and a support (144) for the centring structure, this centring structure including a peripheral portion(61; 71; 81; 91) and a central portion (63; 73; 83; 93) resiliently connected to the peripheral portion by at least one connecting element (65; 75; 85; 95), the central portion being formed of a highly magnetically permeable material and, in cross-section with respect to the pivot axis, having smaller dimensions than those of the magnet; and **in that** the peripheral portion is rigidly assembled to said support (144) so that the central portion is centred on the determined pivot axis, said peripheral portion being forcibly inserted into a housing in the support and the central portion being thus connected to the support via the peripheral portion.

2. Pivoting device according to claim 1, **characterized in that** the magnetic flux centring structure (60; 70; 80; 90) includes at least three resilient connecting elements (65; 75; 85; 95).

3. Pivoting device according to claim 2, **characterized in that** said at least three resilient connecting elements are regularly arranged around said central portion.

4. Pivoting device according to claim 3, **characterized in that** said at least three resilient connecting elements all have a similar shape and are angularly arranged, relative to said central portion, with a substantially constant angular offset between any two adjacent connecting elements.

5. Pivoting device according to one of the preceding claims, **characterized in that** the device defines an anti-shock pivoting device wherein the bearing (105) is resiliently maintained in place.

6. Pivoting device according to one of the preceding claims, **characterized in that** a tribological jewel, defining a bearing surface (119A) for the pivot (103), is arranged between the magnetic flux centring device (60; 70; 80; 90) and said pivot, the bearing surface forming a stop member for the pivot.

7. Pivoting device according to one of the preceding claims, **characterized in that** the bearing (105) includes a setting (144), the magnet (106) being mounted in the setting and the magnetic flux centring device (60; 70; 80; 90) being inserted between the magnet and the opening of the setting.

8. Pivoting device according to one of claims 1 to 6, **characterized in that** the external portion (91) of the centring device (90) forms a tube and said central portion is situated at one end of said tube, said magnet (206) being mounted inside the tube so that the central portion is between said magnet and the pivot (103).
